**Europäisches Patentamt**

**European Patent Office**

**Office européen des brevets**

(11) Numéro de publication: **0 080 418**
**B1**

(12) **FASCICULE DE BREVET EUROPEEN**

(45) Date de publication du fascicule du brevet: **08.10.86**

(51) Int. Cl.⁴: **G 21 C 17/06, G 01 N 29/00**

(21) Numéro de dépôt: **82402130.7**

(22) Date de dépôt: **23.11.82**

(54) Procédé d'examen d'un assemblage combustible de réacteur nucléaire et machine d'examen pour la mise en oeuvre de ce procédé.

(30) Priorité: **25.11.81 FR 8122063**

(43) Date de publication de la demande:
**01.06.83 Bulletin 83/22**

(45) Mention de la délivrance du brevet:
**08.10.86 Bulletin 86/41**

(84) Etats contractants désignés:
**BE DE GB IT**

(56) Documents cités:
FR - A - 2 395 571
GB - A - 2 014 311
US - A - 3 107 521
US - A - 4 169 758

POST-IRRADIATION EXAMINATION, PROCEEDINGS
OF THE CONFERENCE HELD IN
GRANGE-OVER-SANDS, 13-16 mai 1980; British
Nuclear Energy Society, 1981, LONDRES (GB), L.V.
CORSETTI et al.: "The combustion engineering
comprehensive fuel inspection stand", pages 173-179,
papier 27

(73) Titulaire: **COMMISSARIAT A L'ENERGIE ATOMIQUE
Etablissement de Caractère Scientifique Technique et
Industriel, 31/33, rue de la Fédération, F-75015 Paris
(FR)**

(72) Inventeur: **Leseur, André, 29, Avenue Aristide Briand,
F-91440 Bures sur Yvette (FR)**
Inventeur: **Delaroche, Pierre, 10, rue Fronval,
F-78140 Velizy (FR)**
Inventeur: **Saglio, Robert, 9, rue des Marchais,
F-92160 Antony (FR)**
Inventeur: **Vaubert, Yves, 2, Allée Isabelle de Giffa,
F-91190 Gif sur Yvette (FR)**

(74) Mandataire: **Mongrédien, André et al, c/o
BREVATOME 25, rue de Ponthieu, F-75008 Paris (FR)**

## Description

La présente invention a pour objet un procédé d'examen d'un assemblage combustible de réacteur nucléaire et une machine d'examen pour la mise en œuvre de ce procédé.

On sait que pendant le fonctionnement d'un réacteur nucléaire, en particulier d'un réacteur refroidi à l'eau, il est nécessaire de vérifier périodiquement les assemblages combustibles qui constituent le cœur de ce réacteur. Cette vérification a notamment pour but de déceler d'éventuelles déformations des crayons combustibles et/ou de la structure de maintien, l'espacement des crayons, et de déceler en temps voulu les risques de fissuration. Lors de l'arrêt du réacteur , certains assemblages qui ont fonctionné sous pression et à haute température sont déchargés et transférés à l'aide de moyens de manutention appropriés vers une machine d'examen qui permet de les vérifier.

On connaît, selon l'art antérieur, diverses réalisations de machines d'examen pour assemblages combustibles de réacteurs nucléaires.

Il est tout à fait classique de suspendre les assemblages dans les opérations de manutention de transfert ou dans les opérations de contrôle par caméra permettant de vérifier l'aspect des constituants d'un assemblage et/ou leur degré de corrosion. Mais, lorsqu'il s'agit de faire un examen de métrologie, il est tout à fait exclu de laisser l'assemblage suspendu pendant le temps que dure cet examen, car l'armature d'un assemblage combustible est légère et se déforme facilement. L'observation visuelle de l'assemblage et sa métrologie seraient donc effectuées alors qu'il est déformé. En conséquence, les mesures seraient faussées.

Une machine d'examen d'un assemblage combustible de réacteur nucléaire comprend donc un socle, un bâti monté sur le socle, un support monté tournant sur le socle et sur lequel le pied de l'assemblage à examiner est positionné, des moyens d'examen de l'assemblage montés sur un chariot qui se déplace sur le bâti.

On connaît déjà (FR-A-2 298 859) une machine d'examen de ce type. Elle comporte des moyens d'examen qui permettent de recueillir des informations concernant l'assemblage à examiner, des moyens pour déplacer les moyens d'examen par rapport à l'assemblage à examiner et enfin des moyens de traitement de l'information recueillie par les moyens d'examen.

Les moyens d'examen sont constitués par un endoscope à prisme, les moyens pour déplacer l'endoscope sont constitués par trois chariots mobiles, le premier en déplacement vertical sur des glissières parallèles aux crayons combustibles de l'assemblage, le deuxième en déplacement horizontal sur des glissières portées par le premier chariot et le troisième en déplacement horizontal perpendiculaire au précédent. Ainsi, l'endoscope porté par le troisième chariot peut être déplacé selon trois directions perpendiculaires.

Toutefois, un inconvénient d'une machine de ce type est que l'assemblage combustible à examiner est pris entre deux supports d'extrémité qui le maintiennent rigidement. Ces supports d'extrémité exercent des contraintes sur l'assemblage. Or, on sait que l'armature d'un assemblage combustible est légère et qu'elle se déforme facilement. L'observation visuelle de l'assemblage et sa métrologie sont donc effectuées alors qu'il est déformé. En conséquence, les mesures sont faussées.

La présente invention a pour objet une machine d'examen d'un assemblage combustible de réacteur nucléaire qui remédie à cet inconvénient. Elle se caractérise en ce qu'elle comporte des moyens de guidage du pied de l'assemblage par rapport au support et des moyens de sécurité situés à un niveau déterminé sur le bâti et constitués par une paire de fourches situées à un niveau déterminé, cette paire de fourches étant déplaçable par rapport au bâti de manière à venir se placer autour de l'assemblage sans contact avec lui, mais en le retenant au cas où il s'écarterait de sa position d'équilibre. Les moyens d'examen de l'assemblage peuvent se déplacer sur toute la hauteur de cet assemblage.

Les avantages de cette machine sont les suivantes.

L'examen de l'assemblage est effectué dans une position où il repose sans contraintes sur un support de référence. L'assemblage à examiner est posé verticalement sur le bloc support sur lequel il repose librement. Il ne subit pas d'autres contraintes que celles qui proviennent de son propre poids. Il se trouve donc dans la position de référence utilisée pour la métrologie des assemblages combustibles. Cette machine permet donc une métrologie aussi précise que possible de l'assemblage combustible.

En outre, les moyens de sécurité enserrent l'assemblage sans contact pendant son examen et permettent que l'examen s'effectue sur toute la hauteur en s'effaçant alternativement pour permettre le passage du chariot qui porte les moyens d'examen.

Par ailleurs, afin de permettre l'examen de l'assemblage combustible sur toute sa hauteur, y compris au niveau de la pièce d'extrémité inférieure sur laquelle il repose, l'invention concerne également une machine d'examen munie de moyens de guidage escamotables. En effet, on sait que de manière classique, un assemblage combustible à examiner est centré par rapport à son support inférieur par des moyens de centrage qui se présentent sous la forme d'un tronc de pyramide à base carrée. La partie évasée de cette pyramide est dirigée vers le haut. Le pied de l'assemblage y pénètre au cours de la présentation de l'assemblage. Le pied est centré automatiquement par rapport aux pions de centrage prévus sur le bloc de support.

On sait également qu'il est connu de disposer un bloc-support mobile en rotation de manière à examiner successivement les quatre faces latérales de l'assemblage.

Conformément à une caractéristique de l'invention, les moyens de guidages sont escamotables de manière à permettre la rotation du bloc support sur lequel se trouve l'assemblage, et donc l'examen des faces latérales de son pied. On peut ainsi examiner l'assemblage sur toute sa hauteur et prendre des mesures de référence sur le bloc support.

De préférence, les moyens de guidage sont réalisés en deux parties au moins, ces parties pouvant s'écarter du pied de l'assemblage de manière à permettre son examen sur toute sa hauteur.

D'autre part, le fait que les moyens de guidage sont escamotables permet la rotation du support d'assemblage et donc l'examen successif des quatre faces de l'assemblage.

De plus, selon une autre de ses caractéristiques, l'invention concerne une protection des moyens d'observation contre le rayonnement émis par l'assemblage. On sait en effet qu'un assemblage combustible irradié émet un rayonnement qui endommage les moyens d'observation ou de métrologie. Par exemple, une caméra de télévision, même conçue pour fonctionner sous rayonnement, possède une durée de vie limitée. La protection des moyens d'observation réalisée selon l'invention accroît leur durée de manière importante. Elle s'applique aux moyens d'examen qui sont constitués d'une source d'ondes dirigée vers l'assemblage et d'un récepteur qui reçoit les ondes réfléchies par l'assemblage, le traitement des ondes reçues permettant d'en déduire, par un traitement ultérieur, des observations le concernant.

Ce dispositif de protection se compose d'un miroir incliné par rapport à la face de l'assemblage à observer, de préférence à 45 degrés. Ce miroir renvoie les ondes émises par ladite source d'ondes et diminue fortement l'irradiation des moyens d'examen. De préférence, il est transparent au rayonnement ionisant. Le récepteur des ondes est orienté transversalement au rayonnement émis et il est disposé derrière une plaque de protection.

De façon plus précise, l'invention concerne une machine d'examen d'un assemblage combustible de réacteur nucléaire qui comporte une source émettrice d'ondes dirigée vers l'assemblage à examiner, des moyens d'examen de l'assemblage qui reçoivent les ondes émises par ladite source et qui ont été réfléchies par l'assemblage. Elle se caractérise en ce que les moyens d'examen comportent un axe, cet axe étant dirigé vers un miroir, ce miroir étant incliné de telle manière qu'il renvoie les ondes réfléchies par l'assemblage vers les moyens d'examen, une protection contre le rayonnement émis par l'assemblage étant disposée entre ce dernier et les moyens d'examen.

Lorsque les moyens d'examen sont constitués par une caméra de télévision, ce qui permet l'observation visuelle ou la métrologie de l'assemblage, la source émettrice d'ondes est une source lumineuse au moyen de laquelle on éclaire l'assemblage. La lumière réfléchie par l'assemblage est reçue par la caméra de télévision après avoir été réfléchie par le miroir. Etant donné que la caméra de télévision se trouve derrière une protection, elle est soustraite au rayonnement direct émanant de l'assemblage. En conséquence, sa durée de vie est accrue de façon très importante.

Les moyens d'examen peuvent également être constitués par un récepteur à ultra-sons. Dans ce cas, la source émettrice d'onde est un émetteur à ultra-sons. L'émetteur et le récepteur peuvent être confondus.

Enfin, l'invention concerne une machine d'examen pour assemblage combustible dans laquelle on utilise un couple émetteur-récepteur à ultra-sons pour recueillir des informations concernant l'assemblage à examiner. L'émetteur à ultrasons est un émetteur focalisé. A titre d'exemple, sa distance focale peut être de 200 mm environ et le diamètre du faisceau de 1 mm environ au niveau du foyer. Ce faisceau d'ultrasons est dirigé perpendiculairement à la face à examiner. L'écho réfléchi par les différentes parties constitutives de l'assemblage est reçu par un récepteur à ultrasons. Ce signal est ensuite enregistré, par exemple sur un support magnétique. Le traitement ultérieur de ces signaux, qui ne fait pas partie à proprement parler de l'invention, permet de déduire un grand nombre de mesures concernant les caractéristiques de l'assemblage. Lorsque l'on déplace le couple émetteur-récepteur perpendiculairement à l'une des faces de l'assemblage, le traitement de l'écho reçu permet de déterminer la position des différents constituants de l'assemblage, par exemple des crayons combustibles rencontrés successivement selon la direction de déplacement. D'autre part, la durée du trajet aller-et-retour du faisceau d'ultrasons permet de déterminer la position des différents constituants de l'assemblage selon une direction perpendiculaire au déplacement du couple émetteur-récepteur. On peut en déduire par la suite le vrillage et l'arcure de l'assemblage.

Ce procédé d'examen d'un assemblage combustible est avantageux comparativement aux procédés de l'art antérieur parce qu'il permet une mesure précise de ses dimensions. D'autre part, contrairement aux dispositifs à palpeurs mécaniques, cette mesure est effectuée sans contact, donc sans risques de créer des amorces de défauts sur une partie de l'assemblage. Il peut donc être utilisé pour la métrologie d'un assemblage qui doit être rechargé. Il ne dépend pas de l'éclairement, comme une caméra de télévision, et il permet une mesure plus précise. Enfin, il fonctionne sous l'eau, ce qui permet de l'utiliser par exemple dans la fosse de chargement de châteaux de transport d'assemblages combustibles irradiés. Il suffit en fait que le milieu dans lequel il est utilisé soit conducteur des ultrasons.

Le procédé de métrologie par ultrasons de l'invention peut bien entendu être utilisé dans le cas d'un assemblage neuf. Il peut être également utilisé en combinaison avec le dispositif de protection décrit plus haut. Dans ce cas, aussi bien l'émetteur que le récepteur à ultrasons sont situés derrière une plaque de protection. Le faisceau d'ultrasons émis et le faisceau d'ultrasons réfléchis sont renvoyés par le miroir à 45 degrés. Cette machine d'examen s'appliquera alors de préférence au cas d'assemblages irradiés.

D'autre part, l'invention concerne un procédé d'examen d'un assemblage combustible de réacteur nucléaire dans une machine d'examen du type défini ci-dessus. Dans ce procédé:

— on amène l'assemblage à contrôler suspendu à un moyen de manutention sur le support;

— on le pose verticalement sur ce support, ledit assemblage étant en équilibre sur son pied;

— on amène les moyens de sécurité situés à un niveau déterminé, ces moyens de sécurité n'étant pas en contact avec l'assemblage, mais le retenant au cas où il s'écarterait de sa position d'équilibre.

Ainsi, l'assemblage est maintenu en sécurité par des fourches situées à des niveaux différents.

D'autres caractéristiques et avantages de l'invention apparaîtront mieux à la lecture de la description qui suit d'un exemple de réalisation donné à titre indicatif et non limitatif, en référence aux dessins annexés, sur lesquels:

— la figure 1 est une vue générale de présentation d'une machine d'examen pour assemblage combustible montrant schématiquement la piscine de stockage et le transfert des assemblages combustibles jusqu'à la machine d'examen;

— la figure 2 est une vue latérale d'une machine d'examen d'assemblage combustible selon l'invention;

— la figure 3 est une vue simplifiée de la machine de la figure 2 qui montre en particulier le miroir permettant l'examen du pied de l'assemblage et le dispositif de centrage du pied de l'assemblage;

— la figure 4 est une vue de dessus de la machine d'examen des figures 2 et 3, qui montre en particulier les fourches de sécurité et le dispositif de centrage escamotable du pied de l'assemblage;

— la figure 5 est une vue de dessus d'une partie de la machine d'examen de l'invention qui illustre le procédé de mesure de l'invention par ultrasons.

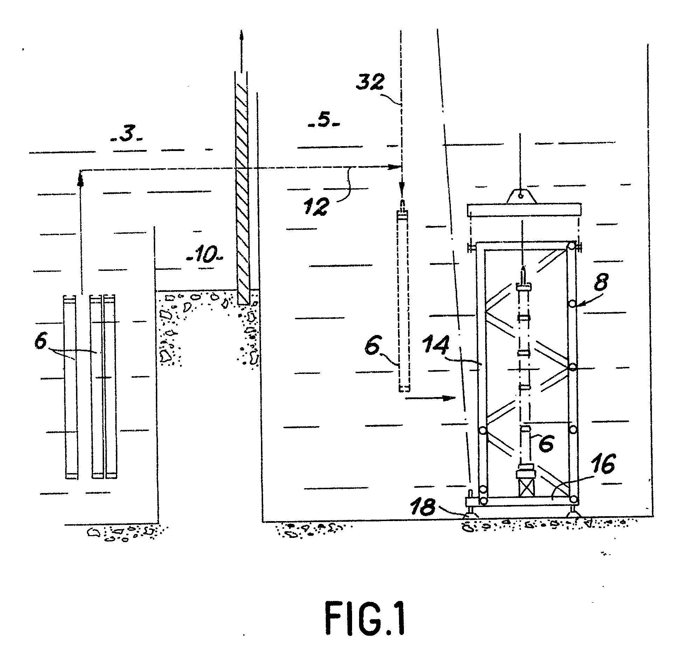

La figure 1 représente schématiquement une vue en coupe d'un bâtiment combustible.

Dans la piscine de stockage 3 on trouve un grand nombre d'assemblages combustibles 6 disposés côte-à-côte.

Périodiquement, il est nécessaire de vérifier certains assemblages au cours de l'utilisation du réacteur. Cette vérification se fait au moyen d'une machine d'examen pour assemblage combustible 8 représentée schématiquement sur la figure 1. La machine 8 se trouve dans la fosse 5 de chargement des châteaux de transport. Elle est constituée d'une charpente métallique tubulaire 14 en acier inoxydable fixée sur une semelle de base 16 munie de trois vérins 18 réglables à distance qui permettent de régler son assise.

Le transfert de chaque assemblage combustible 6 irradié se fait sous eau boriquée 10, ce qui permet de suivre les opérations de manutention tout en assurant une protection contre les radiations et un refroidissement efficace pour l'évacuation de la chaleur résiduelle.

Chaque assemblage combustible 6 à décharger est levé grâce à une machine de manutention (non représentée) qui se déplace au-dessus du plan d'eau. L'assemblage combustible est transféré sous eau jusqu'à la machine d'examen 8. Afin d'éviter d'avoir à trop lever l'assemblage 6, ce dernier est introduit dans la machine d'examen par une échancrure latérale, puis introduit verticalement. On a schématisé par les flèches 12 le trajet suivi par un assemblage combustible pendant son transfert de la piscine de stockage 3 vers la machine 8.

L'assemblage est descendu dans la machine 8 qui comporte des moyens de guidage de son pied. Ces moyens se présentent sous la forme d'une trémie, à base carrée, comme la section de l'assemblage, et qui le guident sur le bloc-support.

Bien que l'on ait représenté sur la figure 1 le cas d'utilisation d'une machine d'examen pour assemblage combustible réalisée selon l'invention pour la vérification d'assemblages combustibles irradiés, il est entendu qu'elle peut être utilisée également pour la vérification d'assemblages neufs.

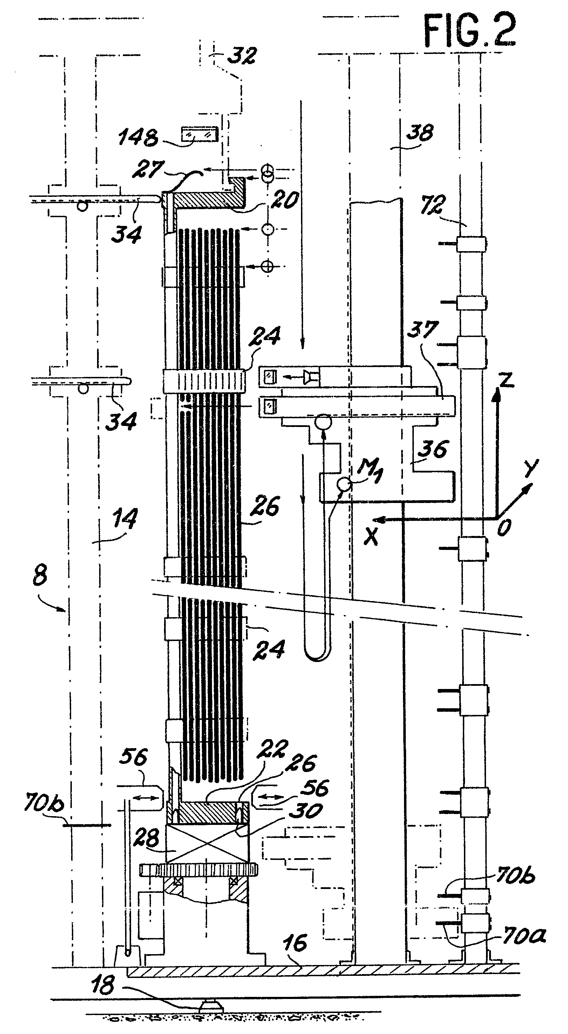

La figure 2 représente une vue latérale en élévation à échelle agrandie de la machine d'examen de l'invention représentée sur la figure 1. La charpente métallique tubulaire 14 qui ne fait pas partie à proprement parler de l'invention a été représentée schématiquement en traits mixtes.

En revanche, on a représenté plus en détail un assemblage combustible 6 dont la machine 8 assure l'examen visuel et la métrologie.

L'assemblage 6 est constitué de deux pièces d'extrémité rigides, une pièce d'extrémité supérieure 20 et une pièce d'extrémité inférieure 22. Les pièces d'extrémité 20 et 22 sont reliées par un certain nombre de tubes-guides rigides qui forment, avec les pièces d'extrémité, l'armature de l'assemblage. Sur les tubes-guides sont montées un certain nombre de grilles d'espacement 24 qui maintiennent un faisceau de crayons combustibles 26.

Lorsqu'il est en place dans le cœur, l'assemblage 6 est disposé entre une plaque supérieure et une plaque inférieure qui font partie des structures internes aménagées dans la cuve du réacteur. Chaque assemblage est guidé en translation par des pions de centrage par rapport aux plaques du cœur. A cette fin, les pièces d'extrémité supérieure 20 et inférieure 22 comportent deux trous 26 diagonalement opposés prévus pour les pions de centrage de la plaque du cœur.

Des ressorts 27, au nombre de quatre, sont prévus sur la pièce d'extrémité supérieure 20. Ils ont pour but de repousser l'assemblage 6 contre la plaque inférieure du cœur à l'encontre de la poussée hydraulique qui résulte, pendant le fonctionnement du réacteur, de la circulation ascendante de l'eau de refroidissement entre les crayons combustibles 26.

Une perche de machine de manutention 32 s'adapte sur la pièce d'extrémité supérieure 20 afin de permettre la manutention de l'assemblage.

De manière classique, la machine 8 comporte des moyens d'examen que l'on déplace par rapport à l'assemblage à examiner. Ces moyens d'examen, qui seront décrits ultérieurement, sont portés par un chariot mobile 36 déplaçable verticalement selon l'axe OZ d'un trièdre trirectangle OX, OY, OZ. Un moteur électrique $M_1$ assure le déplacement vertical du chariot 36 par rapport à une poutre 38. Le chariot 36 supporte lui-même un deuxième chariot 37 qui peut se déplacer transversalement par rapport au chariot 36 selon l'axe OX. Un moteur électrique $M_2$ assure le déplacement du chariot 37 par rapport au chariot 36.

L'assemblage 6 à examiner est positionné par rapport au système de référence OXYZ. Il est placé sur le bloc-support 28 qui constitue un bloc de référence pour les mesures.

Les trous 26 de positionnement de la pièce 22 sont utilisés pour le positionnement de l'assemblage par rapport au bloc-support 28. Ce bloc 28 comporte deux pions de centrage 30, identiques aux pions de centrage prévus sur la plaque inférieure des structures internes du cœur, et qui s'adaptent donc aux trous de positionnement 26 de la pièce d'extrémité inférieure 22.

On trouve deux moyens de sécurité disposés à différents niveaux. Chacun de ces moyens est constitué d'une paire de fourches, située chacune de part et d'autre de l'assemblage.

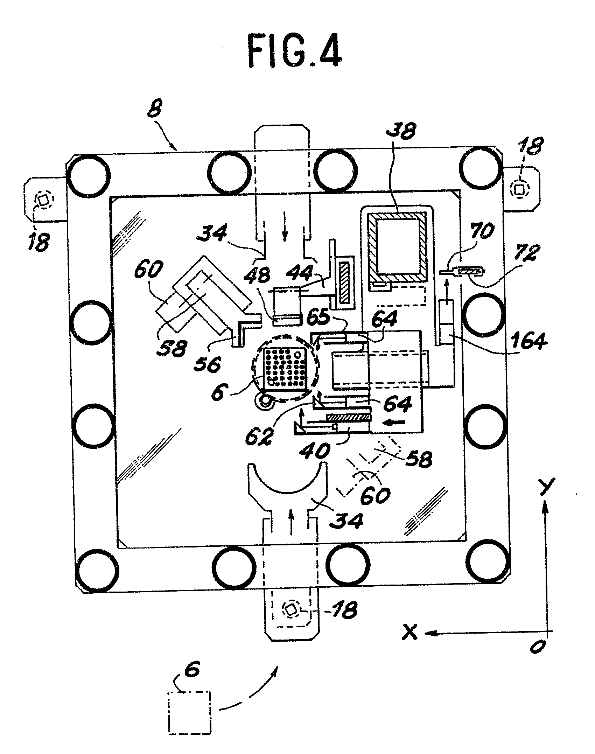

Conformément au procédé d'examen d'assemblages combustibles de réacteur nucléaire selon l'invention, on pose verticalement l'assemblage à contrôler sur le support 28, l'assemblage 6 étant en équilibre sur sa pièce d'extrémité inférieure 22. On approche deux fourches de sécurité 34 situées à un niveau déterminé. Les deux fourches peuvent être déplacées en translation. Elles enserrent l'assemblage 6 sans contact et forment autour de lui un anneau, qui peut être continu ou interrompu, mais qui dans tous les cas l'empêcherait de tomber au cas où il viendrait à s'écarter de sa position d'équilibre. Les fourches 34 schématisées sur la figure 2 ont été représentées en vue de dessus sur la figure 4. Les moyens d'examen visuels sont portés par un chariot 36 qui se déplace sur une poutre verticale 38 de section rectangulaire. Un moteur électrique assure le déplacement du chariot 36 par rapport à la poutre 38 par l'intermédiaire d'un treuil et d'une chaîne (non représentés). Les fourches 34 s'effacent alternativement pour permettre le passage du chariot 36 et la métrologie et l'examen visuel de l'assemblage 6 sur toute sa hauteur.

Le procédé d'examen de l'invention apporte donc un avantage par rapport aux procédés et aux machines d'examen actuellement connus. Il permet en effet d'examiner l'assemblage sur toute sa hauteur. Au contraire, les pièces de support qui sont utilisées généralement pour le maintenir à ses deux extrémités empêchent le contrôle des pièces d'extrémité de l'assemblage 20 et celui des ressorts 27.

La machine 8 comporte des moyens d'observation visuelle. Ils sont constitués par une caméra de télévision 40 mobile transversalement par rapport au chariot 36, comme on peut le voir sur la figure 4, qui représente une vue de dessus de la machine d'examen 8, et permettent un balayage selon l'axe OX.

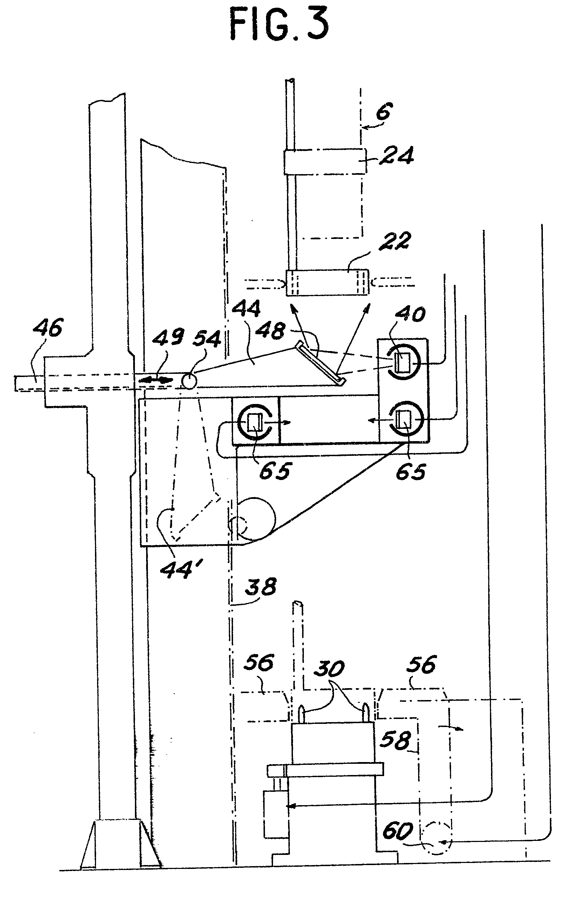

En outre, de l'autre côté de l'assemblage, par rapport à la caméra 40, on trouve un miroir 48 porté par un bras 44. Le bras 44 est solidaire d'un chariot 46 déplaçable selon l'axe OX afin de rétracter le miroir 48. Sur la figure 3, ce miroir a été représenté en position sortie. Le miroir 48 permet l'observation visuelle en bout de la pièce d'extrémité inférieure 22 de l'assemblage.

Il existe également un miroir escamotable 148 (schématisé sur la figure 2) placé à la partie supérieure de la machine 8 pour l'examen de la tête de l'assemblage 6 et des ressorts 27. Ce miroir 148 est relevable manuellement par un filin relié au bras (non représenté) auquel il est fixé.

On a schématisé sur la figure 3 l'extrémité inférieure de l'assemblage 6, avec une grille inférieure 24 d'espacement des éléments combustibles représentée en traits mixtes. L'assemblage 6 est suspendu à la perche 32 (voir figure 2) de la machine de manutention et maintenu à une distance convenable du miroir 38. On amène la caméra de télévision 40, portée par le chariot d'examen 36, à la hauteur du miroir 38, ce qui permet l'examen du dessous de l'assemblage, comme schématisé par la flèche 42.

Le miroir 48 est déplaçable en translation, comme schématisé par la flèche 49. Un moteur 50 assure le déplacement en translation du chariot 46.

De préférence, l'examen visuel du pied de l'assemblage 6 est effectué lorsqu'on le remonte, c'est-à-dire tout à fait à la fin de l'examen. En effet, l'examen du pied doit être effectué lorsque l'assemblage est à mi-hauteur environ de la machine 8. Si le chariot 46 se bloquait lorsque l'assemblage est dans cette position, il ne serait pas possible d'effectuer la suite des mesures. Au contraire, il est moins gênant que le chariot 46 se bloque à la remontée de l'assemblage 6, parce que l'ensemble des autres mesures a déjà été effectué.

Par ailleurs, on a prévu une goupille de cisaillement à l'axe 54 du bras 44. Au cas où, à la suite d'un mauvais fonctionnement des contacts de fin de course par exemple, l'assemblage heurterait le miroir 48, la goupille se cisaillerait et le bras viendrait par gravité dans la position 44' schématisé en traits pointillés.

D'autre part, afin de permettre l'examen des quatre faces de la partie inférieure de l'assemblage, on a prévu des moyens de guidage 56 réalisés en plusieurs parties, par exemple en deux parties. De façon classique, le pied de l'assemblage à examiner, en particulier la pièce d'extrémité inférieure, est centré par un tronc de pyramide qui permet de le guider jusqu'à ce que les pions de centrage 30 s'engagent dans les trous de positionnement 26. Toutefois, selon les dispositifs connus, ces moyens de guidage du pied ne sont pas amovibles. Ils gênent donc l'observation de la partie inférieure de l'assemblage lorsque celui-ci est en place. Conformément à l'invention, ces moyens de guidage 56 sont réalisés en deux parties, comme on peut le voir en particulier sur la figure 4. Ils sont situés à l'extrémité d'un bras articulé 58, un moteur électrique 60 assurant l'ouverture et la fermeture des deux bras 58. Sur la figure 4, seul l'un de ces deux bras a été représenté, afin de ne pas surcharger le dessin. Lorsqu'ils sont rapprochés, ils forment un tronc de pyramide conique à base carrée, qui assure le guidage de l'assemblage lors de sa présentation. Ainsi, grâce à ce dispositif, on peut examiner l'assemblage lorsqu'il repose librement sur son pied, ce qui est la position de référence utilisée en métrologie, sans être gêné par les moyens de guidage.

La machine d'examen 8 comporte encore d'autres moyens d'examen. Ils sont constitués par des couples émetteur-récepteur à ultrasons.

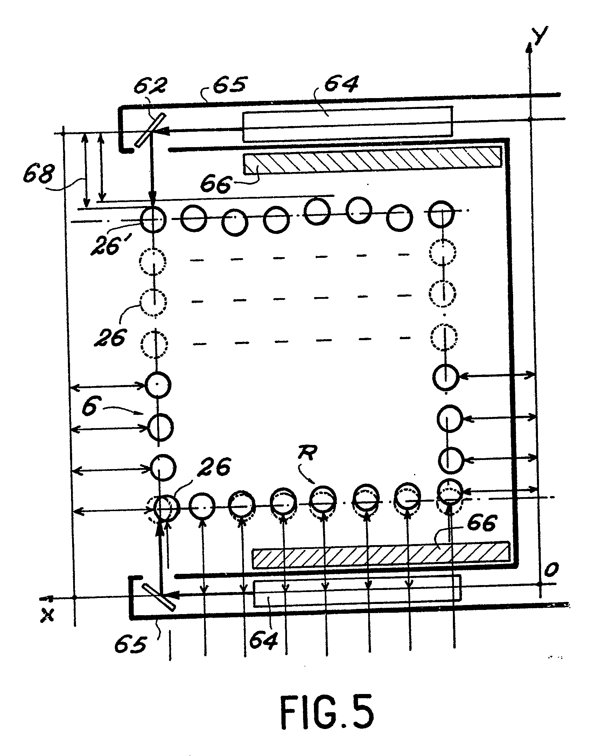

Un couple émetteur-récepteur à ultrasons permet de déterminer, en une seule mesure, la position d'un crayon 26 ou d'une autre partie de l'assemblage selon les axes OX et OY. Il est déplacé selon l'axe OX (voir figure 5). Lorsqu'il passe en regard d'une pièce de l'assemblage, l'écho est reçu par le récepteur, puis associé aux coordonnées de la machine, fournies par les divers codeurs (position angulaire du bloc-support 28, position en Z du chariot 36, et position en X du chariot 37) de la machine, il est enregistré sur un support magnétique et visualisé. Dans le cas de l'examen des crayons combustibles, l'écho reçu est maximum lorsque le couple émetteur-récepteur est au niveau de l'axe géométrique. La détermination de ce maximum permet donc de déduire la position réelle du crayon 26 selon l'axe OX.

D'autre part, la durée du trajet aller-et-retour du faisceau d'ultrasons permet de déduire la position selon l'axe OY d'un crayon ou d'une pièce quelconque, par exemple la position 68 du crayon 26'.

On déduit ainsi en un seul passage réalisé selon l'axe OX la position absolue en X et en Y de chaque crayon d'une rangée périphérique.

Il existe deux transducteurs focalisés (couple émetteur-récepteur), situés en vis-à-vis de part et d'autre de l'assemblage 6, qui permettent d'effectuer simultanément le contrôle de deux faces. En temps normal, chaque transducteur fonctionne en émission-réception. Toutefois, pendant une partie du cycle de mesure, on fait fonctionner les transducteurs opposés, l'un en émetteur, l'autre en récepteur, afin de calculer les corrections à effectuer en cas de variation de la vitesse des ultrasons dans le milieu sous diverses influences, telles que par exemple la température ou la concentration en bore.

Un troisième transducteur focalisé à ultrasons 164, dénommé couple étalon ou transducteur de référence, se déplace verticalement et solidairement du chariot 36 devant une règle fixe 72 portant des index horizontaux 70. Ce transducteur permet d'avoir un repérage absolu en Z du début et de la fin des zones à examiner (grilles par exemple) et d'assurer d'autre part la synchronisation de l'électronique de mesure des temps de parcours dans l'eau des ultrasons (synchronisation des signaux de validation des échos).

Un autre problème que l'on rencontre dans l'examen visuel et la métrologie d'assemblages irradiés provient du rayonnement qu'ils émettent. L'intensité de ce rayonnement est telle que les moyens d'observation ou de métrologie utilisés ont une durée de vie réduite dans les conditions particulières de fonctionnement de la machine (examen à faible distance d'assemblage irradiés très peu refroidis, c'est-à-dire après un faible temps de décroissance).

L'invention concerne donc également un dispositif de protection des moyens d'examen qui remédie à cet inconvénient.

On a représenté sur la figure 5 la réalisation de ce dispositif de protection appliquée aux couples émetteur-récepteur à ultrasons 64. L'assemblage 6 est représenté en section transversale, et seuls les crayons 26 extérieurs ont été figurés.

Les deux bras 65 sont déplaçables de part et d'autre de l'assemblage 6, selon la direction de l'axe OX. A l'extrémité de chaque bras 65 se trouve un miroir 62, orienté à 45 degrés par rapport à l'axe OX. Chaque miroir 62 limite l'importance du rayonnement reçu par le transducteur mais réfléchi les ultrasons. Le faisceau d'ultrasons est donc renvoyé à 90 degrés à l'aller, réfléchi par les crayons 26 ou une autre pièce, puis réfléchi à 90 degrés en sens inverse avant d'être reçu.

Le miroir 62 est par exemple un miroir en titane.

Une protection 66 est intercalée entre les moyens d'examen 64 et l'assemblage irradié 6. Cette protection 66 est par exemple constituée par une coquille en Dénal, qui est un alliage de tungstène fritté.

Comme il y a deux bras de mesure (65), on peut déduire en un seul passage les mesures sur deux faces opposées. En faisant pivoter l'assemblage de 90 degrés, par rotation du bloc-support (28), on obtiendra les mesures sur les deux autres faces.

Les avantages du procédé de mesure par ultrasons de l'invention sont les suivants: il permet tout d'abord une mesure sans contact notamment avec les crayons combustibles 26. C'est là un avantage sur les capteurs mécaniques, lesquels peuvent produire des amorces de défauts sur les gaines des crayons combustibles; par suite, on ne peut pas les utiliser sur un assemblage irradié qui a été fragilisé par cette irradiation. D'autre part, l'image fournie par une caméra de télévision est très dépendante de l'éclairement et ne permet notamment pas de déterminer avec précision l'axe d'un crayon. Au contraire, le dispositif de mesure par ultrasons ne présente pas cet inconvénient et assure une précision bien meilleure que celle d'une caméra de télévision. Enfin, avec une caméra de télévision, on ne peut examiner qu'une seule face à la fois parce que l'éclairement simultané de deux faces opposées gênerait les observations.

Toutes les informations reçues par les capteurs ultrasonores et les coordonnées courantes sont enregistrées en vue de leur traitement ultérieur. Ce traitement est réalisé par un système informatique qui sort du cadre de la présente invention et qui ne sera donc pas décrit. Toutefois, on peut signaler que le système informatique peut fournir une représentation instantanée des zones à examiner pendant le développement de l'examen et que le traitement des informations reçues permet de déduire tous les renseignements nécessaires concernant l'assemblage, par exemple l'espacement entre deux crayons, la distance entre le sommet d'un crayon et une plaque d'extrémité, le fléchissement d'un crayon ou le vrillage de l'assemblage. Par exemple, dans le cas de la rangée R représentée sur la figure 5, la mesure de la position des crayons permet de constater un décalage croissant de la position réelle des crayons combustibles par rapport à leur position théorique, la position réelle étant représentée en trait gras alors que la position théorique est représentée en trait fin. On en déduit qu'un vrillage de l'assemblage combustible s'est produit pendant son utilisation.

La mesure qui vient d'être décrite pour un niveau donné peut bien entendu être répétée à différents niveaux. Le déplacement du chariot sur la poutre verticale 36 est contrôlé par des index disposés sur une règle graduée verticale qui sert de référence. Le transducteur étalon, solidaire du chariot 36 fournit un signal lorsqu'il passe en face d'un index 70. Le système de détection des index 70 fonctionne suivant un principe identique à celui du système de détection de la position des axes des crayons 26 qui a été décrit précédemment. On connaît ainsi de façon précise la position correspondante des deux transducteurs émetteur-récepteur 64 qui effectuent les mesures sur l'assemblage combustible. On a représenté par exemple une série d'index 70. L'index inférieur 70a correspond à une position de la sonde 64a située en regard du bloc de référence 28. L'index 70b correspond à la référence 0, c'est-à-dire à la face supérieure du bloc de référence 28. Les quatre repères 70A, B, C, D délimitent deux zones d'inspection, respectivement les zones AB et CD, du détecteur sonore.

On sait que la vitesse de propagation des ondes ultrasonores dans un milieu de couplage, l'eau dans le cas de la machine d'examen 8 de l'invention, dépend d'un certain nombre de paramètres, tels que par exemple la température de l'eau ou sa concentration en bore. Etant donné que la précision du procédé de mesure de l'invention dépend de la précision avec laquelle la vitesse de propagation des ultrasons dans l'eau est connue, il est nécessaire de corriger cette valeur en fonction des divers paramètres dont elle dépend. Par exemple, l'assemblage irradié 6 dégage une importante quantité de chaleur qui réchauffe l'eau dans laquelle il est plongé. Il existe donc un gradient de température important autour de l'assemblage à examiner.

L'invention concerne donc un procédé d'utilisation de la machine d'examen qui tient compte de la vitesse de propagation réelle des ondes ultrasonores dans le milieu liquide de couplage situé entre l'émetteur et le récepteur. Pour déterminer avec précision cette vitesse de propagation, on fait fonctionner l'un des émetteur-récepteur (transducteur) à ultrasons 64 se trouvant dans l'un des bras 65 en émetteur, et l'autre couple émetteur-récepteur (transducteur) 64 se trouvant dans le bras 65 situé de l'autre côté de l'assemblage à examiner en récepteur. Le premier transducteur ultrasonore 64 émet une onde ultrasonore, par exemple une impulsion, qui est reçue par le deuxième transducteur 64. La distance entre l'émetteur et le récepteur est une caractéristique de la machine. Elle est donc connue avec une grande précision. Dans le cas de l'exemple de réalisation représenté sur la figure 5, cette distance tient compte de la totalité du parcours de l'onde avant et après réflexion sur les deux miroirs 62. Comme la distance parcourue par l'onde ultrasonore est connue, on peut donc en déduire sa vitesse de propagation dans l'eau. Par suite, on peut corriger les mesures de distance en X et en Y d'une pièce constitutive de l'assemblage telle qu'un crayon ou une grille réalisées suivant le procédé décrit précédemment.

Cette correction des variations de la vitesse de propagation des ondes ultrasonores dans le milieu liquide de couplage peut être effectuée entre chaque mesure, par exemple lorsque l'on balaye deux faces latérales de l'assemblage 6 pour mesurer les positions en X et en Y des crayons combustibles 26. En effet, lorsque le chariot 37 se déplace selon l'axe 0X, le faisceau ultrasonore passe en regard d'une rangée de crayons combustibles 26, puis en regard de l'interstice qui sépare deux rangées de crayons. A ce moment-là, aucun obstacle n'est interposé (si l'assemblage n'est pas exagérement vrillé) entre les deux miroirs 62. On peut donc faire fonctionner la machine d'examen selon le mode précédemment décrit, dans lequel l'un des couples fonctionne en émetteur et l'autre en récepteur, ce qui permet d'effectuer la correction de la vitesse de propagation des ondes ultrasonores dans le milieu liquide. Au cas où l'assemblage serait exagérément vrillé, il reste possible d'effectuer cette correction en début et en fin de balayage du chariot 37, car sa course dépasse le format de l'assemblage.

La machine d'examen de l'invention comporte encore un troisième transducteur 164 (couple émetteur-récepteur) à ultrasons, appelé dans la suite du texte couple de référence, et une règle-étalon verticale 72 sur laquelle sont placés des index de référence 70. Comme on peut le voir sur la figure 5, ces index délimitent des zones d'inspection. Ainsi, les repères 70A et 70B délimitent une zone d'inspection, les repères 70C et 70D délimitent une seconde zone d'inspection d'une grille.

Le couple émetteur-récepteur de référence 164 est dirigé vers les index 70. Les ondes ultrasonores qu'il émet sont réfléchies par ces index lorsque le chariot 36 qui se déplace verticalement passe en regard de l'un d'eux. Etant donné que la position de ces index 70 est connue avec une grande précision, la réception de l'écho ultrasonore permet de déterminer avec précision la position du chariot 36 par rapport aux index de la règle-étalon, et donc fournit des cotes de référence absolues en Z des zones à examiner.

Ces cotes de référence absolues peuvent être utilisées pour recaler périodiquement le codeur Z. En effet, on sait que la machine d'examen comporte trois codeurs, un codeur en X, un codeur en Z et un codeur angulaire de la position du bloc-support 28. Chaque codeur donne à chaque instant les coordonnées de la machine, c'est-à-dire les coordonnées en X, en Z des chariots 37 et 36 respectivement, et la position angulaire du bloc-support 28. Cependant, il peut arriver qu'une certaine erreur (dérive) s'introduise dans les indications données par les codeurs. En particulier, la course du chariot 36 est importante et il peut se produire une dérive du codeur d'un bout à l'autre de cette course. Le couple émetteur-récepteur de référence 164 permet avantageusement de recaler les indications fournies par le codeur Z sur la position absolue selon l'axe 0Z du chariot 36 qu'il fournit régulièrement, en particulier au début et à la fin de chaque zone à examiner.

En outre, la distance entre le couple émetteur-récepteur 164 et les index 70 de la règle 72 est connue avec grande précision, puisqu'il s'agit d'une caractéristique de la machine. La durée du trajet aller-et-retour de l'écho du couple de référence 164 permet de déduire la vitesse de propagation des ondes ultrasonores dans le milieu de couplage. La valeur de cette vitesse de propagation peut être également utilisée pour effectuer des corrections de la vitesse de propagation des ondes. Dans ce cas, il ne serait pas nécessaire d'utiliser le mode précédemment décrit dans lequel l'un des couples émetteur-récepteur 64 fonctionne en émetteur et l'autre en récepteur.

La durée du trajet aller-et-retour de l'onde émise par le couple de référence 164 peut en outre être utilisée pour la validation de l'écho reçu par chacun des couples émetteur-récepteur (transducteur) 64 qui réalise les mesures en X et en Y conformément au procédé de l'invention. Plus précisément, cela permet de déterminer la position de la porte de validation de l'écho reçu par les couples 64. On sait en effet que ces couples de mesure 64 ne reçoivent pas un écho unique, mais des échos multiples, car le signal ultrasonore subit lui-même de multiples réflexions. Il est donc nécessaire de valider l'écho reçu au moyen d'une porte de validation dans laquelle doit se trouver normalement l'écho qui correspond à un trajet aller-retour unique de l'onde du couple 64 à l'objet dont on désire déterminer la position. Bien entendu, la porte de validation est placée en tenant compte de la vitesse de propagation des ondes ultrasonores dans le milieu liquide de couplage. Mais cette vitesse peut varier, comme on l'a dit précédemment. Il est donc nécessaire de corriger la position de la porte de validation en fonction de ces variations de la vitesse de propagation. Ceci est obtenu à partir de l'indication du couple de référence 164, laquelle permet de corriger la position de la porte en fonction des variations de la vitesse de propagation des ondes dans le milieu de couplage.

Ainsi, la machine d'examen permet d'effectuer l'examen visuel des six faces de l'assemblage au moyen d'une caméra de télévision et sa métrologie. Deux miroirs escamotables, respectivement un miroir de tête et un miroir de pied, permettent l'examen de la tête et du pied de l'assemblage. La machine d'examen permet de réaliser notamment la mesure de la hauteur de l'assemblage, de l'espacement entre les extrémités des crayons périphériques et les pièces d'extrémité 20 et 22, la position des grilles 24, la position de l'axe des crayons 26 extérieurs, la hauteur des ressorts tels que le ressort 27, la flèche et le vrillage de l'assemblage.

**Revendications**

1. Machine d'examen d'un assemblage combustible de réacteur nucléaire comprenant un socle (16), un bâti (14) monté sur le socle (16), un support (28) monté tournant sur le socle (16) et sur lequel le pied de l'assemblage à examiner est positionné, des moyens d'examen (40, 64) de l'assemblage montés sur un chariot (36) qui se déplace sur le bâti (14), caractérisée en ce qu'elle comporte des moyens de guidage (56) du pied de l'assemblage par rapport au support (28) et des moyens de sécurité (34) situés à un niveau déterminé sur le bâti (14), et constitués par une paire de fourches situées à un niveau déterminé, cette paire de fourches (34) étant déplaçable par rapport au bâti de manière à venir se placer autour de l'assemblage (6) sans contact avec lui, mais en le retenant au das où il s'écarterait de sa position d'équilibre, et en ce que les moyens (40, 64) d'examen de l'assemblage peuvent se déplacer sur toute la hauteur de cet assemblage.

2. Machine d'examen selon la revendication 1, caractérisée en ce qu'elle comporte une deuxième paire de fourches (34), et en ce que lesdites paires de fourches (34) s'effacent alternativement pour permettre le passage du chariot (36) qui porte les moyens d'examen (40, 64) sur toute la hauteur de l'assemblage (6).

3. Machine d'examen selon l'une quelconque des revendications 1 et 2, caractérisée en ce que lesdits moyens de guidage (56) sont réalisés en deux parties au moins, ces parties pouvant s'écarter du pied de l'assemblage (6) après que ce dernier a été mis en position de manière à permettre son examen sur toute sa hauteur.

4. Machine d'examen selon l'une quelconque des revendications 1 à 3, caractérisée par une source émettrice d'ondes (64), dirigée vers l'assemblage à examiner (6), un miroir (62) incliné de telle manière qu'il renvoie les ondes réfléchies par l'assemblage (6) vers des moyens d'examen (40, 64) de l'assemblage, et par une protection (66) contre le rayonnement émis par l'assemblage disposée entre ce dernier et les moyens d'examen (40, 64).

5. Machine d'examen selon la revendication 4, caractérisée en ce que la source émettrice d'ondes est une source lumineuse, et en ce que les moyens d'examen sont constitués par une caméra de télévision (40).

6. Machine d'examen selon la revendication 4, caractérisée en ce que la source émettrice d'ondes est constituée par un émetteur à ultrasons (64) et les moyens d'examen par un récepteur à ultrasons (64).

7. Machine d'examen selon l'une quelconque des revendications 1 à 3, caractérisée en ce que ladite source émettrice d'ondes est constituée par un émetteur à ultrasons (64) et les moyens d'examen par un récepteur à ultrasons (64), l'émetteur émettant un faisceau d'ultrasons en direction de l'assemblage combustible (6), les variations de l'écho reçu lorsque le couple émetteur-récepteur (64) est déplacé relativement à l'assemblage permettant de déterminer la position de ses différentes pièces constitutives (24, 27, 26).

8. Machine d'examen selon la revendication 7, caractérisée en ce que la distance (68) qui sépare le couple émetteur-récepteur (64) de la partie de l'assemblage qui a réfléchi le faisceau d'ultrasons est déterminée par la mesure de la durée du trajet aller-et-retour du faisceau d'ultrasons.

9. Machine d'examen selon l'une quelconque des revendications 4 et 7, caractérisée en ce que la protection (66) contre le rayonnement émis par l'assemblage est constituée par une coquille d'un alliage de tungstène.

10. Machine d'examen selon la revendication 7, caractérisée en ce qu'elle comporte un couple émetteur-récepteur (164), dit couple de référence, et une règle-étalon (72) verticale comportant des index de référence (70 placés à la hauteur du début et de la fin des zones à examiner (70A, 70B), le couple de référence étant dirigé vers les index (70) de la règle-étalon et fournissant, par réflexion des échos ultrasons sur ces index (70), des cotes de référence absolues des zones à examiner (A, B) selon la direction de l'axe 0Z.

11. Machine d'examen selon la revendication 10, caractérisée en ce que la distance entre ledit couple (164) émetteur-récepteur de référence et les index (70) est connue avec précision et en ce que l'on valide l'écho reçu par les couples émetteur-récepteur de mesure (64) de la machine par une porte de validation à l'intérieur de laquelle l'écho doit se trouver pour être retenu, la position de cette porte de validation étant déterminée en fonction de la durée du trajet aller-et-retour de l'écho du couple de référence (164) aux index (70) de la règle-étalon (72).

12. Procédé d'examen d'un assemblage combustible de réacteur nucléaire dans une machine d'examen, ladite machine comprenant un socle (16), un bâti (14) monté sur le socle (16), un support (28) monté tournant sur le socle (16) et sur lequel le pied de l'assemblage à examiner est positionné, des moyens d'examen (40, 64) de l'assemblage montés sur un chariot (36) qui se déplace sur le bâti (14), ladite machine d'examen comportant des moyens de guidage (56) du pied de l'assemblage par rapport au support (28) et des moyens de sécurité (34) situés à un niveau déterminé sur le bâti (16), ces moyens de sécurité, constitués par une paire de fourches, cette paire de fourches (34) étant déplaçable par rapport au bâti de manière à venir se placer autour de l'assemblage (6), les moyens (40, 64) d'examen de l'assemblage pouvant se déplacer sur toute la hauteur de cet assemblage, dans lequel procédé:
— on amène l'assemblage (6) à contrôler suspendu à un moyen de manutention (32) sur le support (28);
— on le pose verticalement sur ce support (28), ledit assemblage (6) étant en équilibre sur son pied (22);
— on amène les moyens de sécurité (34) à un niveau déterminé, ces moyens de sécurité (34) n'étant pas en contact avec l'assemblage (6), mais le retenant au cas où il s'écarterait de sa position d'équilibre.

13. Procédé d'examen d'un assemblage combustible de réacteur nucléaire selon la revendication 12, caractérisé en ce que l'on déplace verticalement les moyens d'examen (40, 64) relativement à l'assemblage (6) à examiner en écartant les moyens de sécurité (34) situés à un niveau déterminé pour laisser le passage aux moyens d'examen (40, 64), l'assemblage étant maintenu en sécurité pendant cette opération par des sécurités (34) situées à un niveau différent.

14. Procédé d'examen d'un assemblage combustible de réacteur nucléaire selon la revendication 12, la machine d'examen comportant en outre deux couples (64) émetteur-récepteur à ultrasons situés de part et d'autre de l'assemblage (6) à examiner, la distance entre les deux couples émetteur-récepteur étant connue avec précision, caractérisé en ce que:
— on fait fonctionner l'un des couples (64) émetteur-récepteur en émetteur et l'autre en récepteur;
— on mesure la durée de propagation d'une onde ultrasonore dans le milieu liquide (10) de couplage du premier au second couple émetteur-récepteur;
— on en déduit la vitesse de propagation des ondes ultrasonores dans ce milieu (10);
— on corrige les mesures de la machine d'examen (8) en fonction de cette vitesse.

15. Procédé selon la revendication 14, caractérisé en ce que l'on détermine la vitesse de propagation des ondes ultrasonores dans un milieu liquide de couplage (10) à partir de la durée du trajet aller-et-retour de l'écho du couple de référence aux index de la règle-étalon (70) et en ce que l'on corrige les mesures des couples émetteur-récepteur de mesure (64) de la machine en fonction de cette vitesse.

## Claims

1. Machine for inspecting a nuclear reactor fuel assembly, comprising a base (16), a frame (14) mounted on the base (16), a support (28) which is mounted rotatably on the base (16) and on which the foot of the fuel assembly to be inspected is positioned, and fuel assembly inspection means (40, 64) mounted on a carriage (36) moving along on the frame (14), characterised in that it has means (56) of guiding the foot of the fuel assembly relative to the support (28) and safety means (34) located at a specific level on the frame (14) and consisting of a pair of forks arranged at a specific level, this pair of forks (34) being displaceable relative to the frame, so as to take up position around the fuel assembly (6) without contact with the latter, but retaining it in the event that it moves away from its position of equilibrium, and in that the fuel-assembly inspection means (40, 64) can move along the entire height of this fuel assembly.

2. Inspection machine according to Claim 1, characterized in that it has a second pair of forks (34), and in that the said pairs of forks (34) move aside alternately to allow the carriage (36) carrying the inspection means (40, 64) to pass over the entire height of the fuel assembly (6).

3. Inspection machine according to either one of Claims 1 and 2, characterized in that the said guide means (56) are in at least two parts, and these parts can move away from the foot of the fuel assembly (6), after the latter has been put in position so as to allow it to be inspected over its entire height.

4. Inspection machine according to any one of Claims 1 to 3, characterized by a wave-transmitting source (64) directed towards the fuel assembly to be inspected (6), by a mirror (62) inclined in such a way that it returns the waves reflected by the fuel assembly (6) towards the fuel assembly inspection means (40, 64), and by a shield (66) protecting against the radiation emitted by the fuel assembly and located between the latter and the inspection means (40, 64).

5. Inspection machine according to Claim 4, characterized in that the wave-transmitting source is a light source, and in that the inspection means consist of a television camera (40).

6. Inspection machine according to Claim 4, characterized in that the wave-transmitting source consists of an ultrasonic transmitter (64), and the inspection means consist of an ultrasonic receiver (64).

7. Inspection machine according to any one of Claims 1 to 3, characterized in that the said wave-transmitting source consists of an ultrasonic transmitter (64), and the inspection means consist of an ultrasonic receiver (64), the transmitter transmitting an ultrasonic beam in the direction of the fuel assembly (6), and the variations in the echo received when the transmitter/receiver pair (64) is moved relative to the fuel assembly make it possible to determine the position of its various component parts (24, 27, 26).

8. Inspection machine according to Claim 7, characterized in that the distance (68) separating the transmitter/receiver pair (64) from the part of the fuel assembly which has reflected the ultrasonic beam is determined by measuring the outward and return transit time of the ultrasonic beam.

9. Inspection machine according to either one of Claims 4 and 7, characterized in that the shield (66) protecting against the radiation emitted by the fuel assembly consists of a tungsten-alloy shell.

10. Inspection machine according to Claim 7, characterized in that it has a transmitter/receiver pair (164) called the reference pair, and a virtical standard straightedge (72) having reference indices (70) located at the height of the beginning and end of the zones to be inspected (70A, 70B), the reference pair being directed towards the indices (70) of the standard straightedge and, as result of the reflection of the ultrasonic echoes on these indices (70), supplying absolute reference dimensions over the zones to be inspected (A, B), in the direction of the axis 0Z.

11. Inspection machine according to Claim 10, characterized in that the distance between the said transmitter/receiver reference pair (164) and the indices (70) is known exactly, and in that the echo received by the transmitter/receiver measuring pairs (64) of the machine is validated by a validation gate, within which the echo must be located in order to be retained, the position of this validation gate being determined according to the outward and return transit time of the echo between the reference pair (164) and the indices (70) of the standard straightedge (72).

12. Process for inspecting a nuclear reactor fuel assembly in an inspection machine, the said machine comprising a base (16), a frame (14) mounted on the base (16), a support (28) which is mounted rotatably on the base (16) and on which the foot of the fuel assembly to be inspected is positioned, and fuel assembly inspection means (40, 64) mounted on a carriage (36) moving along on the frame (14), the said inspection machine having means (56) of guiding the foot of the fuel assembly relative to the support (28) and safety means (34) arranged at a specific level on the frame (16), these safety means consisting of a pair of forks, this pair of forks (34) being displaceable relative to the frame so as to take up position round the fuel assembly (6), the fuel-assembly inspection means (40, 64) being capable of moving over the entire height of this fuel assembly, in which process:

– the fuel assembly (6) to be monitored, suspended on a handling means (32), is brought onto the support (28);

– it is placed vertically on this support (28), the said fuel assembly (6) being balanced on its foot (22);

– the safety means (34) are brought to a specific level, these safety means (34) not being in contact with the fuel assembly (6), but retaining it in the event that it moves away from its position of equilibrium.

13. Process for inspecting a nuclear reactor fuel assembly according to Claim 12, characterized in that the inspection means (40, 64) are moved vertically relative to the fuel assembly (6) to be inspected, the safety means (34) located at a specific level being moved away to allow the inspection means (40, 64) to pass, and the fuel assembly being held safely during this operation by safety devices (34) arranged at a different level.

14. Process for inspecting a nuclear reactor fuel assembly according to Claim 12, the inspection machine also having two ultrasonic transmitter/receiver pairs (64) arranged on either side of the fuel assembly (6) to be inspected, the distance between the two transmitter/receiver pairs being known exactly, characterized in that:

– one of the transmitter/receiver pairs (64) is made to operate as a transmitter and the other as a receiver;

– the propagation time of an ultrasonic wave in the liquid medium (10) coupling the first transmitter/receiver pair to the second is measured;

– the propagation speed of the ultrasonic waves in this medium (10) is deduced from this;

– the measurements of the inspection machine (8) are corrected as a function of this speed.

15. Process according to Claim 14, characterized in that the propagation speed of the ultrasonic waves in a liquid coupling medium (10) is determined on the basis of the outward and return transit time of the echo between the reference pair and the indices of the standard straight edge (70), and in that the measurements of the transmitter/receiver measuring pairs (64) of the machine are corrected as a function of this speed.

**Patentansprüche**

1. Prüfvorrichtung für ein Brennelementbündel eines Kernreaktors mit einem Sockel (16), einen auf den Sockel (16) angebrachten Gestell (14), einer drehbar auf dem Sockel (16) angebrachten Stütze (18), auf der der Fuss des zu prüfenden Brennelementbündels zu positionieren ist, Prüfmittel (40, 64) für das Bündel, die an einem Schlitten (36) angebracht sind, der an dem Gestell (14) verschiebbar ist, dadurch gekennzeichnet, dass die Vorrichtung Führungsmittel (56) für den Fuss des Bündels in Bezug auf die Stütze (28) und Sicherheitsmittel (34) umfasst, die sich auf einer bestimmten Höhe des Gestells (14) befinden und aus einem sich auf einer bestimmten Höhe befindbaren Paar Gabeln bestehen, dass dieses Paar Gabeln (34) in Bezug auf das Gestell derart verschiebbar ist, dass es um das Bündel (6) herum ohne Berührung mit diesem angeordnet werden kann, dieses jedoch in dem Fall zurückhält, wenn es von seiner Gleichgewichtslage abweicht, und dass die Prüfmittel (40, 64) für das Bündel über die gesamte Höhe dieses Bündels verfahrbar sind.

2. Prüfvorrichtung nach Anspruch 1, dadurch gekennzeichnet, dass sie ein zweites Paar Gabeln (34) umfasst und dass die Paare von Gabeln (34) abwechselnd rückstellbar sind, um den Durchgang des Schlittens (36), der die Prüfmittel (40, 64) trägt über die gesamte Höhe des Bündels (6) zu ermöglichen.

3. Prüfvorrichtung nach Anspruch 1 oder 2, dadurch gekennzeichnet, dass die Führungsmittel (56) von wenigstens zwei Teilen gebildet sind, wobei sich diese Teile von dem Fuss des Bündels (6) entfernen können, nachdem dieses in eine Lage gebracht worden ist, die dessen Prüfung über seine gesamte Höhe ermöglicht.

4. Prüfvorrichtung nach einem der Ansprüche 1 bis 3, gekennzeichnet durch eine wellenaussendende Quelle (64), die auf das zu prüfende Bündel (6) gerichtet ist, einen derart geneigten Spiegel (62), dass er die von dem Bündel (6) reflektierten Wellen zu den Prüfmitteln (40, 64) für das Bündel reflektiert, und durch einen Schutz (66) gegen die von dem Bündel ausgesandte Strahlung, der zwischen diesem und den Prüfmitteln (40, 64) angeordnet ist.

5. Prüfvorrichtung nach Anspruch 4, dadurch gekennzeichnet, dass die wellenaussendende Quelle eine Lichtquelle ist, und dass die Prüfmittel von einer Fernsehkamera (40) gebildet sind.

6. Prüfvorrichtung nach Anspruch 4, dadurch gekennzeichnet, dass die wellenaussendende Quelle aus einem Ultraschallsender (64) besteht, und dass die Prüfmittel aus einem Ultraschallempfänger (64) bestehen.

7. Prüfvorrichtung nach einem der Ansprüche 1 bis 3, dadurch gekennzeichnet, dass die wellenaussendende Quelle von einem Ultraschallsender (64) und die Prüfmittel von einem Ultraschallempfänger (64) gebildet sind, dass der Sender ein Ultraschallbündel in Richtung auf das Brennelementbündel (6) aussendet, dass die Änderungen des empfangenen Echos, wenn das Paar Sender-Empfänger (64) relativ zu dem Bündel verfahren wird, ermöglichen, die Lage seiner unterschiedlichen esbildenden Teile (24, 27, 26) zu bestimmen.

8. Prüfvorrichtung nach Anspruch 7, dadurch gekennzeichnet, dass der Abstand (68), der das Paar Sender-Empfänger (64) von dem Teil des Bündels, welches das Ultraschallbündel reflektiert hat, trennt, durch die Laufzeit des Ultraschallbündels bestimmt wird.

9. Prüfvorrichtung nach einem der Ansprüche 4 bis 7, dadurch gekennzeichnet, dass der Schutz (66) gegen die von dem Bündel ausgesandte Strahlung aus einer Schale aus einer Wolfram-Legierung besteht.

10. Prüfvorrichtung nach Anspruch 7, dadurch gekennzeichnet, dass sie ein Sender-Empfänger-Paar (164), Bezugspaar genannt, und ein vertikales Einstellnormal (72) aufweist, das Bezugsmarken (70) umfasst, die auf der Höhe des Anfangs und des Endes der zu überprüfenden Bereiche (70A, 70B) angeordnet sind, und dass das Bezugspaar auf die Marke (70) des Einstellnormals gerichtet ist und durch Ultraschallecho an diesen Marken (70) absolute Bezugswerte der zu prüfenden Bereiche (A, B) in Richtung der Achse OZ liefert.

11. Prüfvorrichtung nach Anspruch 10, dadurch gekennzeichnet, dass der Abstand zwischen dem Sender-Empfänger-Bezugspaar (164) und den Marken (70) mit Präzision bekannt ist und dass man das von den Sender-Empfänger-Messpaaren (64) der Vorrichtung empfangende Echo mittels eines Gültigmachungstores gültigmacht, innerhalb von dem sich das Echo befinden muss, um zurückgehalten zu werden, wobei die Lage dieses Gültigmachungstores als Funktion der Laufzeit

des Echos des Bezugspaares (164) zu den Marken (70) des Einstellnormals (72) bestimmt wird.

12. Verfahren zum Prüfen eines Brennelementbündels eines Kernreaktors in einer Prüfvorrichtung, wobei die Vorrichtung umfasst einen Sockel (16), ein auf dem Sockel (16) angebrachtes Gestell (14), eine drehbar auf dem Sockel (16) angebrachte Stütze (28), auf der der Fuss des zu prüfenden Bündels positioniert ist, Prüfmittel (40, 64) für das Bündel, die an einem Schlitten (36) angebracht sind, der an dem Gestell (14) verfahrbar ist, wobei die Prüfvorrichtung Führungsmittel (56) für den Fuss des Bündels in Bezug auf die Stütze (28) und sich auf einer bestimmten Höhe an dem Gestell (16) befindende Sicherheitsmittel (34) umfasst, wobei die Sicherheitsmittel von einem Paar Gabeln gebildet sind, welches in Bezug auf das Gestell derart verfahrbar ist, dass es um das Bündel (6) herum angeordnet werden kann, und wobei die Prüfmittel (40, 64) für das Bündel über die gesamte Höhe dieses Bündels verfahrbar sind, wobei bei diesem Verfahren:

— das zu prüfende Bündel (6) an einem Handhabungsmittel (32) hängend auf die Stütze (28) gebracht wird;

— das Bündel senkrecht auf diese Stütze (28) gesetzt wird, wobei sich das Bündel (6) im Gleichgewicht auf seinem Fuss (22) befindet;

— die Sicherheitsmittel (34) auf eine bestimmte Höhe herangebracht werden, wobei sich diese Sicherheitsmittel (34) nicht in Berührung mit dem Bündel (6) befinden, dieses jedoch in dem Fall zurückhalten, wenn es von seiner Gleichgewichtslage abweicht.

13. Verfahren zum Prüfen eines Brennelementbündels eines Kernreaktors nach Anspruch 12, dadurch gekennzeichnet, dass man die Prüfmittel (40, 64) relativ zu dem zu prüfenden Bündel (6) verfährt, indem die sich auf einer bestimmten Höhe befindenden Sicherheitsmittel (34) rückgestellt werden, um den Prüfmitteln (40, 64) den Durchgang zu lassen, wobei die Sicherheit für das Bündel während dieses Vorganges von sich auf einer unterschiedlichen Höhe befindenden Sicherheitsmitteln (34) aufrecht erhalten wird.

14. Verfahren zum Prüfen eines Brennelementbündels eines Kernreaktors nach Anspruch 12, wobei die Prüfvorrichtung ferner zwei Ultraschall-Sender-Empfänger-Paare (64) umfasst, die sich beidseitig des zu prüfenden Bündels (6) befinden, wobei der Abstand zwischen den zwei Sender-Empfänger-Paaren mit Präzision bekannt ist, dadurch gekennzeichnet, dass

— man eines der Sender-Empfänger-Paare (64) als Sender und das andere als Empfänger arbeiten lässt;

— die Fortpflanzungsdauer einer Ultraschallwelle in einem flüssigen Kopplungsmedium (10) des ersten zu dem zweiten Sender-Empfänger-Paar misst;

— man daraus die Fortpflanzungsgeschwindigkeit der Ultraschallwellen in diesem Medium (10) ableitet;

— man die Messungen der Prüfvorrichtung (8) als Funktion dieser Geschwindigkeit korrigiert.

15. Verfahren nach Anspruch 14, dadurch gekennzeichnet, dass man die Fortpflanzungsgeschwindigkeit der Ultraschallwellen in einem flüssigen Kopplungsmedium (10) aufgrund der Laufzeit des Echos des Bezugspaares für die Marken des Einstellnormals (70) bestimmt, und dass man die Messungen der Sender-Empfänger-Messpaare (64) der Vorrichtung als Funktion dieser Geschwindigkeit korrigiert.

FIG.1

# FIG.2

FIG.3

# FIG.4

FIG.5

21